Europäisches Patentamt

European Patent Office

Office européen des brevets

(19)

(11) Publication number: **0 183 342**
**A1**

(12) **EUROPEAN PATENT APPLICATION**

(21) Application number: 85306024.2

(22) Date of filing: 23.08.85

(51) Int. Cl.⁴: **F 16 K 7/00**

(30) Priority: 29.08.84 GB 8421787

(43) Date of publication of application:
04.06.86 Bulletin 86/23

(84) Designated Contracting States:
AT BE CH DE FR GB IT LI LU NL SE

(71) Applicant: SAUNDERS VALVE COMPANY LIMITED
Grange Road
Cwmbram Gwent NP44 3XX Wales(GB)

(72) Inventor: Nicholas, Norman John
29 Willins
Coed Eva Cwmbran Gwent(GB)

(72) Inventor: Williams, Phillip Anthony
13 Bellview Close
Trevethin Pontypool Gwent(GB)

(74) Representative: Goodenough, Nigel et al,
A.A. Thornton & Co. Northumberland House 303-306
High Holborn
London WC1V 7LE(GB)

(54) Valves.

(57) A diaphragm valve (1) comprises a body (2) and a bonnet
assembly (12 interconnected by screw threads (9, 10). The
handwheel (17) is coupled to the bonnet member (11) by
screw threads (20, 21) to convert rotation of the handwheel
into axial movement which is transmitted to the diaphragm
compressor (16) by a pin (18). If the valve is fully open and
excessive torque is applied to the handwheel in the opening
direction the pin (18) moves slightly out of its bore (19) to
permit disengagement of the threads (20, 21).

EP 0 183 342 A1

-1-

VALVES

This invention relates to a valve and more particularly to a valve which includes a closure assembly in screw threaded engagement with the valve body.

The provision of a screw threaded interconnection between the closure assembly and the body of a valve for example a diaphragm valve is advantageous in that it provides a simple and inexpensive means of connecting the closure assembly to the body, and is particularly well suited to automated or semi-automated assembly of valves. The use of a screw threaded interconnection is particularly desirable when one or both of the valve components is manufactured by a technique such as injection moulding or precision die casting which allows the threads to be formed without a thread cutting operation.

However, if a screw threaded connection is provided between the closure assembly and the valve body, it is necessary to leave the screw threaded connection in a state in which it can be unscrewed in order to permit servicing of the valve. In other words, if it is desired to permit the closure assembly to be unscrewed from the valve body in order to effect servicing of the valve then the screw threaded connection between the closure assembly and the valve body cannot be sealed permanently at the time of assembly.

If a handwheel is provided for opening and closing the valve, torque is transmitted from the handwheel to the remainder of the closure assembly if an attempt is made to turn the handwheel in the direction tending to open the valve when the valve is already fully open. If an excessive torque is applied to the handwheel under these conditions, there is a danger that the entire closure assembly will be unscrewed from the body permitting the rapid escape of line fluid through the opening of the valve body. This is clearly highly undesirable.

Accoring to the present invention there is provided a valve comprising a valve body and a closure assembly in screw threaded engagement with the valve body, the closure assembly including a handwheel rotatable to move a closure member between a closed position and an open position characterised in that the closure assembly includes means for limiting the torque in the opening direction which can be transmitted from the handwheel to the remainder of the closure assembly when the closure member is in the open position.

In the preferred embodiment of the invention the torque limiting means comprises means permitting disengagement of the screw threads which convert rotary movement of the handwheel into axial movement of the closure member. Preferably the screw threads remain in engagement when the valve is in the normal fully open position, thereby providing a stop against further rotation of the handwheel when the valve is in the normal fully open position. In this case, any attempt at further rotation of the handwheel in the direction tending to open the valve will be met with resistance. However, the torque limiting means is then effective to permit disengagement of the threads if the torque applied in the opening direction exceeds a limit determined by the torque limiting means.

In the preferred embodiment of the invention the valve is a diaphragm valve and the closure assembly is a bonnet assembly comprising the handwheel, a bonnet member a closure diaphragm, and a diaphragm compressor. The handwheel is in screw threaded engagement with the remainder of the bonnet assembly, and is coupled to the diaphragm compressor by means which normally permit rotation of the handwheel relative to the diaphragm compressor, but do not permit movement of the handwheel axially relative to the diaphragm compressor. In this case, the torque limiting means can conveniently be provided in the form of means permitting axial movement of the handwheel relative to the diaphragm compressor to permit disengagement of the screw threads. In effect, excessive torque applied to the handwheel when the valve is fully open will be converted by the screw threads between the handwheel and the remainder of the bonnet assembly into an axial load applied to the diaphragm compressor. Means are accordingly provided to limit the maximum axial load which can be transmitted in the opening direction from the handwheel to the diaphragm compressor so that when a predetermined limit of axial loading is reached the handwheel can move slightly in the axial direction to permit disengagement of the threads.

The means limiting the transmission of axial load between the handwheel and the diaphragm compressor preferably comprises a pin which is a press fit within an aperture provided in the compressor, the press fit being designed to limit the axial load which it can transmit.

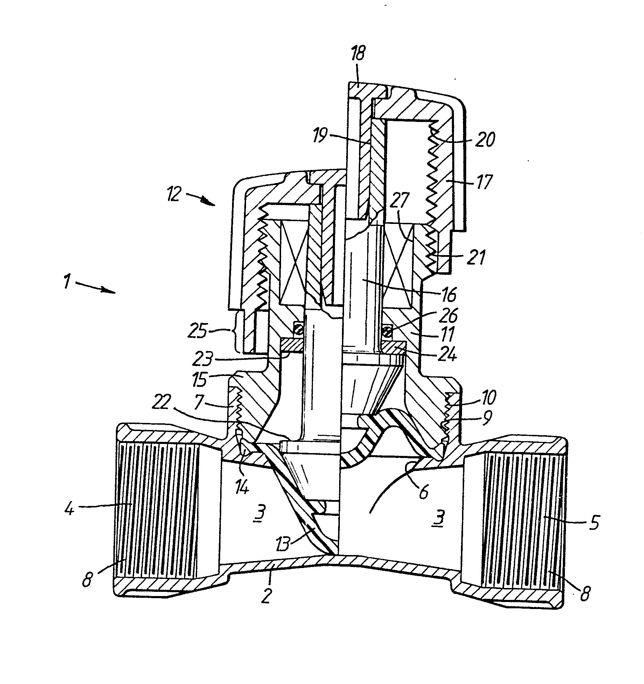

The invention will be better understood from the following description of a preferred embodiment thereof, given by way of example only, reference being had to the accompanying drawing wherein the single Figure is a composite axial cross-section of a diaphragm valve, the left-hand half of the Figure showing the valve in the fully closed position, and the right-hand half of the Figure showing the valve in the fully open position.

The diaphragm valve 1 shown in the drawings comprises a body 2 defining a flow passage 3 extending between end ports 4,5. A diaphragm opening 6 is defined by the valve body and is surrounded by an upstanding collar 7 formed integrally with the valve body. The valve body may be formed of any suitable material, and in a particularly preferred embodiment is formed by high pressure die casting, e.g. from dezincification resistant bronze. The valve body in the region of the ports 4,5 is formed with suitable means, e.g. screw-threads 8, to enable the valve to be connected to adjacent pipe work or the like.

The collar 7 is formed with internal screw threads 9 which mate with external screw thread 10 provided on a bonnet member 11 in order to secure a bonnet assembly 12 to the body 2. The diaphragm opening 6 is spanned by a closure diaphragm 13 which is clamped at the periphery 14 thereof between the valve body 2 and the bonnet assembly 12. The bonnet member 11 includes a flange 15 which abuts the top edge of the collar 7 when the bonnet assembly 12 is screwed fully home. In this manner, the degree of clamp applied to the periphery 14 is predetermined by the size of the diaphragm itself, the valve body 2, and the bonnet member 11, and during assembly of the valve it is only necessary to screw the bonnet assembly fully home until the flange 15 engages the upper edge of the collar 7 in order to provide the correct amount of clamp. This renders the valve shown particularly suitable for automated assembly.

The bonnet assembly 12 inlcudes a diaphragm compressor 16 coupled to a handwheel 17 by a pin 18 which is a press fit within a bore 19 provided in the compressor 16. The connection provided by the pin 18 permits rotation of the handwheel 17 relative to the compressor 16, but prevents axial movement of the compressor 16 relative to the handwheel 17 in normal use of the valve.

The handwheel 17 is formed with internal screw threads 20 which mate with external screw threads 21 provided on the bonnet member 11 whereby rotation of the handwheel is converted by the screw threads into axial movement. This axial movement is transmitted by the pin 18 to the compressor 16 to effect opening and closing movement of the diaphragm 13 as will be well understood by those skilled in the art.

When the valve illustrated is in the fully open position the upper surface 22 of the head of the compressor 16 engages the lower surface 23 of a washer 24 which is secured to the bonnet member 11. The lower end region 25 of the handwheel 17 is devoid of screw threads, and in the normal fully open position the lowest of the threads 20 is still just in engagement with the uppermost of the threads 21, the remainder of the threads 21 being covered by the unthreaded portion 25 of the handwheel. It will be appreciated, therefore, that as the valve is opened in normal use rotation of the handwheel will be checked when the surfaces 22,23 abut to indicate the normal fully open position of the valve.

If, however, torque in the direction to open the valve is subsequently applied to the handwheel 17, this cannot be accommodated by further axial movement of the compressor 16, and will accordingly be transmitted to the bonnet member 11, and will tend to unscrew the connection between the bonnet assembly and valve body provided by the threads 9,10. In order to prevent excessive torque applied to the handwheel 17 from unscrewing the entire bonnet assembly 12 from the collar 7 means are provided for limiting the torque which can be transmitted from the handwheel 17 to the remainder of the bonnet assembly.

The torque limiting means makes use of the fact that the inter-engagement of threads 20,21 converts torque applied to the handwheel 17 into an axial loading of the pin 18. The fit between the pin 18 and the bore 19 is so designed that at a predetermined axial loading the pin 18 can move upwardly as illustrated in the drawing relative to the compressor 16, thereby permitting disengagement of the threads 20,21. Thereafter, the handwheel will spin freely and no torque will be transmitted from the handwheel to the remainder of the bonnet components. The fit between the pin 18 and bore 19 is designed to permit the above described relative movement between the pin 18 and the compressor 16 when the torque applied to the handwheel 17 exceeds a predetermined limit, such limit being less than the torque necessary to unscrew the bonnet assembly 12 from the collar 7.

It will be appreciated that if the handwheel 17 has been forced in the above described manner resulting in a slight lifting of the pin 18, the valve can still be fully closed simply by depressing the handwheel 17 and rotating the handwheel in the closing direction, thereby re-engaging the threads 20,21. If desired, the pin 18 can subsequently be driven home to restore the valve to its original condition.

In order to remove the bonnet assembly 12 from the body 2 for the purposes of servicing the valve it is merely necessary to apply a suitable tool to the bonnet member 11, and for this purpose flats may be provide on the bonnet member 11 for engagement by a spanner.

The above described valve is particularly suitable for automated assembly from a plurality of preformed injection moulded or die cast parts. Preferably, the diaphragm 13 is injection moulded onto a preformed injection moulded compressor 16 and is accordingly intimately interconnected with the compressor 16 as it is formed. The compressor/diaphragm assembly is then inserted into an assembly comprising the injection moulded bonnet member 11, an O-ring seal 26, and the washer 24. The assembly so produced is then screw threaded into the collar 7 utilizing an hexagonal socket 27 provided in the bonnet member 11 until the flange 15 engages the upper edge of the collar 7. The handwheel 17 is then screwed in position, and finally the pin 18 is driven home.

Preferably, all components of the valve except the body 2 are moulded from suitable plastics material, and the entire bonnet assembly 12 including the diaphragm 13 is supplied as a service replacement item which can be substituted for the original bonnet assembly should any component of the valve fail.

CLAIMS

1.      A valve comprising a valve body (2) and a closure assembly (12) in screw threaded engagement (9;10) with the valve body (2), the closure assembly (12) including a handwheel (17) rotatable to move a closure member (13) between a closed position and an open position <u>character-ized in that</u> the closure assembly (12) includes means (18, 19) for limiting the torque in the opening direction which can be transmitted from the handwheel (17) to the remainder of the closure assembly (12) when the closure member (13) is in the open position.

2.      A valve according to claim 1 wherein the closure assembly (12) includes co-operating screw threads (20,21) for converting rotary movement of the handwheel (17) into axial translational movement of the closure member <u>characterised in that</u> the torque limiting means comprises means (18,19) permitting disengagement of the screw threads (20,21) when the closure member (13) is in the open position and a torque above the limiting valve is applied to the handwheel (17) in the opening direction whereby the handwheel (17) is able to rotate relative to the remainder of the closure assembly (12).

3.      A valve according to claim 2 <u>characterised in that</u> in the normal fully open position of the closure member (13) the screw threads (20,21) are in engagement with each other.

4.      A valve according to claim 2 or claim 3 wherein the handwheel (17) is in screw threaded engagement with a member (11) of the closure assembly (12) which is normally fixed relative to the valve body (2) <u>characterised in that</u> the torque limiting means comprises means (18,19) permitting the handwheel (17) to move axially relative to the closure member (13) when the connection between the handwheel (17) and the closure member (13) is subjected to an axial load in excess of a predetermind valve.

5. A valve according to claim 4 <u>characterised in that</u> the torque limiting means comprises a pin (18) which couples the handwheel (17) to a member (16) fast with the closure member (13), the pin (18) being a press fit in a bore (19) in said member (16) fast with the closure member (13), and being designed to be pulled partially out of the bore (19) when subjected to a predetermined axial loading.

6. A valve according to any preceding claim wherein the valve is a diaphragm valve <u>characterised in that</u> the closure assembly (12) comprises a bonnet (11), the handwheel (17), the closure member (13) in the form of a diaphragm, a diaphragm compressor (16) and said torque limiting means (18,19) couples the handwheel (17) to the diaphragm compressor (16).

7. A valve according to claim 6 wherein the periphery (14) of the diaphragm (13) is clamped between the body (2) and the bonnet (11), and the closure assembly (12) is removable as a unit from the valve body (2) by unscrewing the screw threads (9,10).

8. A valve according to claim 7 wherein the limiting torque of the torque limiting means (18,19) is less than the torque required to unscrew the screw threads (9,10)

## DOCUMENTS CONSIDERED TO BE RELEVANT

EP 85306024.2

| Category | Citation of document with indication, where appropriate, of relevant passages | Relevant to claim | CLASSIFICATION OF THE APPLICATION (Int Cl 4) |
|---|---|---|---|
| A | FR - A - 988 899 (VOLCAN S.A.)<br>* Fig. 1-3 *<br>-- | 1-4 | F 16 K 7/00 |
| A | DD - A - 75 831 (H. ISERT)<br>* Fig. *<br>-- | 1-4 | |
| A | GB - A - 319 936 (P.K. SAUNDERS)<br>* Claims 6-8; fig. 1 *<br>-- | 1 | |
| A | GB - A - 376 702 (SOC. AN. RUBI-NETTO TORRIANO)<br>* Fig. 1,2 *<br>-- | 1,3 | |
| A | FR - A - 844 189 (M. GASTON DE SAINTE-FARE)<br>* Fig. 1,3 *<br>---- | 1-4 | TECHNICAL FIELDS SEARCHED (Int Cl 4)<br><br>F 16 K 7/00<br>F 16 K 1/00 |

The present search report has been drawn up for all claims

| Place of search | Date of completion of the search | Examiner |
|---|---|---|
| VIENNA | 10-03-1986 | ROUSSARIAN |